## Europäisches Patentamt

## European Patent Office

## Office européen des brevets

(11) Numéro de publication: **0 201 455**

**B1**

(12)

# FASCICULE DE BREVET EUROPÉEN

(45) Date de publication du fascicule du brevet:
14.12.88

(51) Int. Cl.⁴: **G 02 C 5/22**

(21) Numéro de dépôt: **86810119.7**

(22) Date de dépôt: **07.03.86**

(54) **Charnière élastique pour lunettes.**

(30) Priorité: **01.05.85 CH 1842/85**

(43) Date de publication de la demande:
**12.11.86 Bulletin 86/46**

(45) Mention de la délivrance du brevet:
**14.12.88 Bulletin 88/50**

(84) Etats contractants désignés:
**AT DE FR IT**

(56) Documents cité:
**DE-A-2 242 044**
**FR-A-2 250 127**
**FR-A-2 424 558**

(73) Titulaire: **LN INDUSTRIES S.A., 2, Rue des Falaises, CH- 1211 Geneve 8 (CH)**

(72) Inventeur: **Beyer, Karl, Avenue de Vaudagne 49, CH- 1217 Meyrin (Genève) (CH)**

(74) Mandataire: **Ardin, Pierre, PIERRE ARDIN & CIE 22, rue du Mont- Blanc Case postale 60, CH- 1211 Genève 1 (CH)**

## Description

On connait déjà des charnières élastiques pour lunettes, comprenant deux parties articulées l'une à l'autre, une de ces parties étant destinée à être fixée à la face frontale de la monture de lunettes, et l'autre partie 'étant montée en coulissement dans un logement d'un boîtier allongé destiné à être fixé à l'extrémité avant d'une branche de lunettes, cette partie coulissante étant soumise à l'action d'un ressort de rappel, retenu dans ledit logement par une pièce de fermeture engagée partiellement dans ce logement, des moyens de blocage de la pièce de fermeture étant prévus pour rendre cette dernière fixe par rapport au boîtier.

Les charnières de ce genre sont par exemple décrites dans la demande de brevet allemande N° 32 13 174 et dans le brevet allemand N° 29 40 055.

Dans ces charnières élastiques connues, les moyens de blocage de la pièce de fermeture sont constitués par une pièce mobile qui doit être engagée dans une cavité sous l'effet de la gravité pendant que le ressort de rappel est maintenu par des moyens extérieurs dans une position où il est légèrement comprimé. Ces charnières demandent à l'ouvrier monteur une bonne dextérité.

La présente invention a pour but de faciliter la mise en place et l'enlèvement de la pièce de fermeture de la charnière.

La charnière selon l'invention est caractérisée en ce que la pièce de fermeture présente un trou fileté, orienté longitudinalement par rapport à la partie coulissante, ce trou étant destiné à recevoir une vis agissant sur les moyens de blocage, la tête de cette vis étant accessible en position repliée de la branche.

Le dessin annexé représente schématiquement et à titre d'exemple une forme d'exécution de la charnière faisant l'objet de l'invention.

La figure 1 est une coupe de cette charnière en position déployée de la branche.

La figure 2 est une coupe correspondante montrant la position repliée.

La figure 3 est une coupe correspondante montrant le déployement de la branche au-delà de sa position normale.

La figure 4 est une vue éclatée des différentes pièces constituant la pièce élastique.

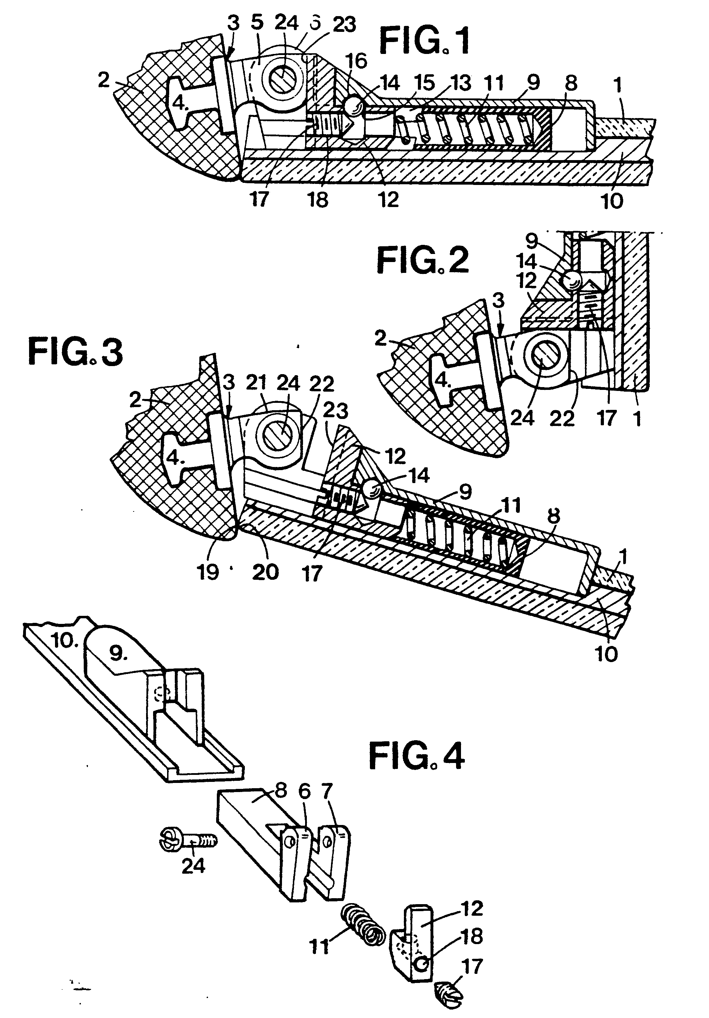

En référence aux figures 1 à 3, la charnière est montée sur des lunettes pour articuler une branche 1 sur la face frontale 2 de la monture de lunettes. Cette charnière comprend une première partie 3 dont une portion 4 est noyée dans la matière plastique formant la face frontale 2. Cette partie 3 présente un charnon mâle 5 autour duquel pivotent deux charnons femelles 6 et 7 (figure 4) de l'autre partie de charnière, grâce à un pivot 24.

Comme le montre la figure 4, les charnons 6 et 7 sont venus d'une pièce avec une partie coulissante 8 destinée à être introduite dans un évidement correspondant d'un boîtier 9 qui est fixe, par exemple par soudure, sur l'extrémité d'une armature métallique 10 de la branche 1. La pièce 8 est sollicitée vers le fond du boîtier 9 par un ressort 11 qui prend appui contre une pièce de fermeture 12, qui est bloquée en position par rapport au boîtier 9 grâce à des moyens de blocage.

La pièce de fermeture 12 pénètre partiellement dans un logement 13 défini par le boîtier 9 et l'extrémité de l'armature 10. Les moyens de blocage sont constitués par une bille 14 qui est engagée dans une ouverture latérale 15 de la pièce de fermeture 12 et dans une cavité 16 ménagée dans la paroi intérieure du boîtier 9. Cette bille 14 est retenue dans sa position de blocage par une vis 17 introduite dans un trou fileté 18 de la pièce de fermeture 12.

Comme le montrent les figures 1 et 2, la tête fendue de la vis 17 n'est pas visible lorsque la branche 1 est déployée mais devient accessible lorsque la branche est repliée, comme illustré à la figure 2.

Lors du montage, on voit que la pièce coulissante 8 et le ressort 11 peuvent être introduits dans le boîtier 9, qui est bien déjà soudé sur l'armature 10. Ensuite, on introduit la pièce de fermeture 12, puis la bille 14 suivie de la vis 17. Lorsqu'on visse cette dernière dans le trou fileté, son extrémité conique repousse latéralement la bille et la fait pénétrer dans l'ouverture latérale 15 jusqu'à ce qu'elle vienne buter contre le fond du trou borgne 16. La pièce 12 est alors fermement rendue solidaire du boîtier 9.

Comme le montre la figure 3, cette disposition permet d'obtenir une ouverture élastique de la branche au-delà de sa position normale d'ouverture. Dans ce cas, l'extrémité de la branche 1 vient buter en 19 par son point 20 contre la partie frontale de la lunette et la pièce coulissante 8 portant les charnons 6 et 7 est sollicitée vers l'exterieur du boîtier 9 contre l'action du ressort 11.

Il y a lieu de remarquer que le charnon mâle 5 présente un profil de came formé par deux plats 21 et 22 avec lesquels une surface d'appui plane 23 de la pièce de fermeture 12 vient coopérer pour définir les positions repliée et respectivement d'utilisation normale de la branche.

Il est bien entendu que l'on peut prévoir de nombreuses variantes d'exécution et que notamment la bille 14 pourrait être remplacée par un autre organe permettant le blocage de la pièce de fermeture 12 sur le boîtier 9. A cet effet, la pièce de fermeture 12 pourrait être fendue et son extrémité intérieure pourrait présenter un trou conique dans lequel viendrait s'engager l'extrémité de la vis pour en provoquer une expansion radiale et obtenir ainsi le blocage de cette pièce dans le boîtier 9.

## Revendications

1. Charnière élastique pour lunettes (1, 2), comprenant deux parties (3, 8) articulées l'une à l'autre, une de ces parties (3) étant destinée à être fixée à la face frontale (2) de la monture de lunettes, et l'autre partie (8) étant montée en coulissement dans un logement (13) d'un boîtier allongé (9) destiné à être fixé à l'extrémité avant d'une branche (1) de lunettes, cette partie coulissante (8) étant soumise à l'action d'un ressort de rappel (11), retenu dans ledit logement par une pièce de fermeture (12) engagée partiellement dans ce logement, des moyens de blocage (14, 17) de la pièce de fermeture étant prévus pour rendre cette dernière fixe par rapport au boîtier, caractérisée en ce que la pièce de fermeture (12) présente un trou fileté (18), orienté longitudinalement par rapport à la partie coulissante (8), ce trou étant destiné à recevoir une vis (17) agissant sur les moyens de blocage (14), la tête de cette vis étant accessible en position repliée de la branche (1).

2. Charnière selon la revendication 1, caractérisée en ce que les moyens de blocage sont constitués par un organe deplaçable (14) disposé dans le trou (18) de la pièce de fermeture, cet organe étant agencé pour être déplacé transversalement par ladite vis pour s'engager dans une ouverture latérale (15) de la pièce de fermeture en même temps que dans une cavité (16) ménagée dans le boîter.

3. Charnière selon la revendication 2, caractérisée en ce que l'organe de blocage (14) est constitué par une bille, l'extrémité de la vis (17) coopérant avec cette bille étant de forme conique.

4. Charnière selon la revendication 1, caractérisée en ce que la pièce de fermeture (12) presente une surface d'appui (13) destinée à coopérer avec un charnon (5) de l'autre partie (3) de charnière, ce charnon (5) présentant un profil de came définissant par sa coopération avec la pièce de fermeture une position d'ouverture normale de la branche et une position repliée de la branche.

5. Charnière selon la revendication 4, caractérisée en ce que la surface d'appui (23) de la pièce de fermeture (12) est plane, le profil de came dudit charnon (5) étant constitué par deux plats (21, 22) prevus sur la tranche dudit charnon.

## Patentansprüche

1. Elastisches Scharnier für Brillen (1, 2), umfassend zwei untereinander gelenkig verbundene Teile (3, 8), wobei einer dieser Teile (3) dazu vorgesehen ist, auf der Stirnseite (2) der Brillenfassung befestigt zu werden und der andere Teil (8) gleitend in einem Lager (13) eines länglichen Gehäuses (9) angeordnet ist, das dazu vorgesehen ist, am vorderen Ende eines Brillenbügels (1) befestigt zu werden, wobei dieser gleitende Teil (8) der Wirkung einer Spannfeder (11) unterworfen ist, welche in dem Lager durch einen Verschlußteil (12) gehalten wird, der teilweise in diesem Lager eingelassen ist, wobei Festsetzmittel (14, 17) für den Verschlußteil vorgesehen sind, um diesen im Verhältnis zu dem Gehäuse festzusetzen, dadurch gekennzeichnet, daß der Verschlußteil (12) ein mit einem Gewinde versehenes Loch (18) aufweist, das im Verhältnis zu dem gleitenden Teil (8) in Längsrichtung ausgerichtet ist, wobei dieses Loch dazu vorgesehen ist, eine Schraube (17) aufzunehmen, die auf die Festsetzmittel (14) wirkt, wobei der Kopf der Schraube bei eingeklappter Stellung des Bügels (1) zugänglich ist.

2. Scharnier nach Aspruch 1, dadurch gekennzeichnet, daß die Festsetzmittel durch ein versetzbares in dem Loch (18) des Verschlußteiles angeordnetes Organ (14) gebildet werden, wobei dieses Organ derart ausgebildet ist, daß es durch die genannte Schraube quer versetzt wird, um in eine seitliche Öffnung (15) des Verschlußteiles und gleichzeitig in einen in dem Gehäuse vorgesehenen Hohlraum (16) einzugreifen.

3. Scharnier nach Anspruch 2, dadurch gekennzeichnet, daß das Testsetzorgan (14) durch eine Kugel gebildet wird, wobei das mit dieser Kugel zusammenwirkende Ende der Schraube (17) eine konische Form aufweist.

4. Scharnier nach Anspruch 1, dadurch gekennzeichnet, daß der Verschlußteil (12) eine Auflagefläche (23) aufweist, die dazu vorgesehen ist, mit einem Gelenkteil (5) des anderen Teiles (3) des Scharniers zusammenzuwirken, wobei dieser Gelenkteil (5) ein Nockenprofil aufweist, das durch sein Zusammenwirken mit dem Verschlußteil eine normale Öffnungsstellung des Bügels und eine eingeklappte Stellung des Bügels definiert.

5. Scharnier nach Anspruch 4, dadurch gekennzeichnet, daß die Auflagefläche (23) des Verschlußteiles (12) eben ist, wobei das Nockenprofil des Gelenkteils (5) durch zwei auf dem Gleitteil des genannten Gelenks vorgesehene Flächen (21, 22) gebildet wird.

## Claims

1. Resilient hinge for spectacles (1, 2) comprising two parts (3, 8) articulated to one another, one of these parts (3) being intended to be fastened to the front part (2) of the frame of the spectacles and the other part (8) being mounted to slide in a housing (13) of an elongated box (9) intended to be fastened to the front end of a temple (1), this sliding part (8) being subjected to the action of a return spring (11), held in said housing by a closing part (12) partially engaged in this housing, locking means (14, 17) of the closing part being provided to make this latter stationary in relation to the box, characterized in that the closing part (12) has a tapped hole (18), oriented longitudinally in relation to the sliding part (8), this hole being intended to receive a screw (17) acting on the locking means (14), the head of this screw being accessible in the folded position of the temple (1).

2. Hinge according to claim 1, characterized in that the locking means consist of a movable member (14) placed in the hole (18) of the closing part, this member being adapted to be moved transversally by said screw to engage in a side opening (15) of the closing part at the same time as in a recess (16) made in the box.

3. Hinge according to claim 2, characterized in that the locking member (14) consists of a ball, the end of the screw (17) cooperating with this ball being tapered.

4. Hinge according to claim 1, characterized in that the closing part (12) is provided with a support surface (23) intended to cooperate with a knuckle (5) of the other part (3) of the hinge, this knuckle (5) having a cam profile defining, by its cooperation with the closing part, a normal open position of the temple and a folded position of the temple.

5. Hinge according to claim 4, characterized in that the support surface (23) of the closing part (12) is plane, the cam profile of said knuckle (5) being made up of two flat parts (21, 22) provided on the edge of said knuckle.

FIG. 1

FIG. 2

FIG. 3

FIG. 4